# EUROPÄISCHE PATENTANMELDUNG

(11) **EP 2 523 323 A1**
(43) Veröffentlichungstag der Anmeldung: **14.11.2012**
(21) Anmeldenummer: 11165621.1
(22) Anmeldetag: 11.05.2011
(51) Int. Cl.: H02M 1/12, H02M 5/458

(54) **Frequenzumrichter mit Gleichtaktdrossel und Verfahren zum Betreiben desselben**

(71) Anmelder: SIEMENS AKTIENGESELLSCHAFT, 80333 München (DE)
(72) Erfinder: Dillig, Reinhold, 96117, Memmelsdorf (DE); Herrmann, Bernd, 91074, Herzogenaurach (DE); Schwinn, Thomas, 91074, Herzogenaurach (DE)

(57) **Zusammenfassung**

Die Erfindung betrifft einen Frequenzumrichter (26) zum Betreiben einer elektrischen Maschine (14) an einem elektrischen Versorgungsnetz (12). Bei dem Frequenzumrichter ist eine Einspeiseeinheit (28) über einen Gleichspannungs-Zwischenkreis (30) mit einem Umrichter (32) gekoppelt. In dem Zwischenkreis (30) ist zumindest ein Zwischenkreiskondensator (48) bereitgestellt. Es soll ein ausreichender Schutz der Einspeiseeinheit (28) vor einem Überstrom bereitgestellt werden. Der erfindungsgemäße Zwischenkreis (30) weist einen Halbleiterschalter (46) auf, welcher dazu ausgelegt ist, eine Stromstärke eines von der Einspeiseeinheit (28) in den zumindest einen Zwischenkreiskondensator (48) fließenden elektrischen Ladestromes zu steuern. Eine Drossel (54) wirkt dabei einem abrupten Anstieg der Stromstärke des Ladestromes entgegen.

## Beschreibung

Die Erfindung betrifft einen Frequenzumrichter zum Betreiben einer elektrischen Maschine an einem elektrischen Netz. Der Frequenzumrichter weist eine Einspeiseeinheit, einen Umrichter sowie einen die Einspeiseeinheit mit dem Umrichter verbindenden Gleichspannungs-Zwischenkreis auf. In dem Gleichspannungs-Zwischenkreis, oder kurz Zwischenkreis, ist zumindest ein Zwischenkreiskondensator bereitgestellt. Die Erfindung betrifft auch ein Verfahren zum Betreiben des Frequenzumrichters. Ein Frequenzumrichter der genannten Art ist aus der DE 197 39 553 A1 bekannt.

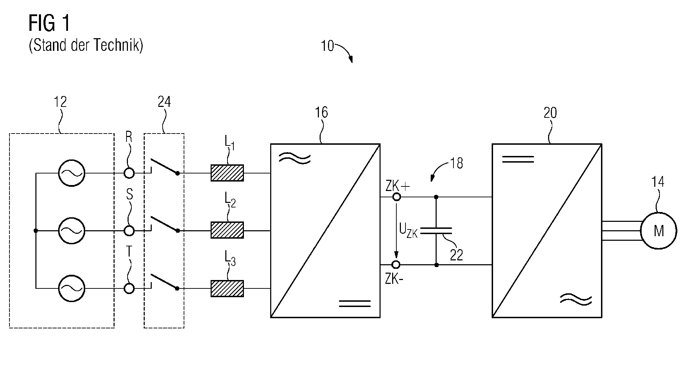

Die prinzipielle Funktionsweise eines Frequenzumrichters der genannten Art ist anhand der schematischen Darstellung in FIG 1 im Folgenden näher erläutert. Mittels eines Frequenzumrichters 10 kann elektrische Energie zwischen einem Wechselspannungs-Versorgungsnetz, im Folgenden kurz als Netz 12 bezeichnet, und einer elektrischen Maschine 14 ausgetauscht werden. Die elektrische Maschine 14 kann ein Elektromotor oder ein Generator sein. Entsprechend erfolgt der Austausch der elektrischen Energie entweder vom Netz 12 zur Maschine 14 oder umgekehrt.

Mittels des Frequenzumrichters 10 ist es möglich, eine Umwandlung zwischen einer Netz-Wechselspannung mit vorgegebener Netzfrequenz einerseits und einer für den Betrieb der elektrischen Maschine 14 nötigen Wechselspannung mit wählbarer Frequenz andererseits durchzuführen. Eine netzseitige Einspeiseeinheit 16 des Frequenzumrichters 10 wandelt dazu zwischen der Netz-Wechselspannung und einer Gleichspannung U_{ZK} um, die zwischen zwei Leitungszweigen ZK+ und ZK- eines Zwischenkreises 18 anliegt. Die Leitungszweige ZK+ und ZK- verbinden die Einspeiseeinheit 16 mit einem Umrichter 20. Sie umfassen in der Regel Stromschienen. Der Umrichter 20 wandelt zwischen der Gleichspannung U_{ZK} und einer Wechselspannung für die elektrische Maschine 14 um.

Das Netz 12 kann, wie hier dargestellt, ein Drehstromnetz mit drei Netzphasen R, S, T sein. Es kann sich bei dem Netz 12 aber z.B. auch um ein zweiphasiges Netz handeln. Auch die elektrische Maschine 14 kann eine Maschine mit einer beliebigen Anzahl von Phasen sein. Hier dargestellt ist eine dreiphasige Drehstrommaschine.

In dem Zwischenkreis 18 sorgt ein Zwischenkreiskondensator 22 durch eine ausreichend große Kapazität dafür, dass eine bei einem der beschriebenen Wandlungsschritte erzeugte Welligkeit der Gleichspannung U_{ZK} so weit geglättet ist, dass sie den anderen Wandlungsschritt nicht beeinflusst. Bevorzugt ist die Zwischenkreiskondensator-Kapazität auch groß genug, um bei einem kurzzeitigen Ausfall der Netz-Wechselspannung für einige Millisekunden einen unterbrechungsfreien Betrieb der elektrischen Maschine 14 zu ermöglichen.

Der Einspeiseeinheit 16 können netzseitig Drosseln L₁, L₂, L₃ vorgeschaltet sein. Diese verhindern, dass von der Einspeiseeinheit 16 bei der Spannungswandlung erzeugte Störsignale als Oberwellen in das Netz 12 übertragen werden. Die Drosseln L₁, L₂, L₃ können eine weitere Funktion haben, wenn die Einspeiseeinheit 16 als Hochsetzsteller betrieben wird, der eine Gleichspannung U_{ZK} mit einem Effektivwert erzeugt, der unabhängig von einem Effektivwert der Netzspannung ist. Die Drosseln L₁, L₂, L₃ sind dann als Kommutierungsinduktivitäten ausgelegt, die verhindern, dass in einem getakteten Betrieb der Einspeiseeinheit 16 erzeugte Kurzschlüsse zwischen den einzelnen Netzphasen R, S, T in der Einspeiseeinheit 16 zu einem Kommutierungsstrom mit einer kritischen Stromstärke führen.

Um die elektrische Maschine 14 als Motor zu betreiben, wird durch Schließen eines Hauptschützes 24 die Einspeiseeinheit 16 mit den Netzphasen R, S, T des Netzes 12 elektrisch verbunden. Die Einspeiseeinheit 16 erzeugt daraufhin, beispielsweise durch eine Vollweg-Gleichrichtung, die Gleichspannung U_{ZK}, wodurch der Zwischenkreiskondensator 22 aufgeladen wird. Dieser Ladevorgang wird im Folgenden als Vorladephase bezeichnet.

Nachdem der Zwischenkreiskondensator 22 so weit aufgeladen ist, dass die Gleichspannung U_{ZK} einen gewünschten Spannungswert erreicht hat, kann die elektrische Maschine 14 betrieben werden. Dazu erzeugt der Umrichter 20 aus der Gleichspannung U_{ZK} eine hier dreiphasige Wechselspannung, so dass in der elektrischen Maschine 14 ein Drehstrom fließt. Dieser Vorgang ist im Folgenden als Betriebsphase bezeichnet. Eine Frequenz des Drehstroms kann bei dem Umrichter 20 einstellbar sein.

Vor dem Schließen des Hauptschützes ist der Zwischenkreiskondensator in der Regel ungeladen. In der Vorladephase ergibt sich hierdurch das Problem, dass nach dem Schließen des Hauptschützes die Stromstärke des vom Netz in den ungeladenen Zwischenkreiskondensator fließenden Ladestroms aufgrund der großen Kapazität des Zwischenkreiskondensators so groß werden kann, dass Komponenten der Einspeiseeinheit beschädigt werden.

Im Zusammenhang mit sporadischen Spannungssprüngen am zwischenkreisseitigen Anschluss der Einspeiseeinheit lehrt die DE 203 11 104 U1, die Einspeiseeinheit über eine Gleichtaktdrossel mit dem Zwischenkreis zu koppeln, um das Auftreten von Überspannungen in dem Zwischenkreis oder in einer am Umrichter angeschlossenen elektrischen Maschine zu verhindern.

Es ist Aufgabe der vorliegenden Erfindung, für einen Frequenzumrichter der beschriebenen Art einen ausreichenden Schutz für dessen Einspeiseeinheit bereitzustellen.

Die Aufgabe wird durch einen Frequenzumrichter gemäß Patentanspruch 1 und ein Verfahren gemäß Patentanspruch 8 gelöst. Vorteilhafte Weiterbildungen des erfindungsgemäßen Frequenzumrichters und des erfindungsgemäßen Verfahrens sind durch die Unteransprüche gegeben.

Der erfindungsgemäße Frequenzumrichter ist eine Weiterbildung des gattungsgemäßen Frequenzumrichters. Bei dem erfindungsgemäßen Frequenzumrichter ist der zumindest eine Zwischenkreiskondensator mit der Einspeiseeinheit über eine Drossel und einen Halbleiterschalter gekoppelt. Zum Aufladen des Zwischenkreiskondensators in der Vorladephase wird gemäß dem erfindungsgemäßen Verfahren zunächst die Einspeiseeinheit mit dem Netz gekoppelt und anschließend der Zwischenkreiskondensator mit elektrischer Energie aus dem Netz aufgeladen, indem eine mittlere Stromstärke eines von der Einspeiseeinheit in den zumindest einen Zwischenkreiskondensator fließenden elektrischen Stromes, d.h. eines Ladestromes des zumindest einen Zwischenkreiskondensators, durch Erzeugen eines Steuersignals an einem Steuereingang des Halbleiterschalters von einer Steuereinrichtung gesteuert wird.

Bei dem erfindungsgemäßen Frequenzumrichter ergibt sich somit der Vorteil, dass der Ladestrom des Zwischenkreiskondensators in der Vorladephase auch bei anfangs ungeladenem Zwischenkreiskondensator in Bezug auf seine Stromstärke gesteuert werden kann. Somit kann verhindert werden, dass eine mittlere Stromstärke des Ladestroms einen kritischen Wert überschreitet, der zu einer Zerstörung von Komponenten der Einspeiseeinheit führen würde.

Der erfindungsgemäße Frequenzumrichter weist in dem Zwischenkreis bevorzugt zusätzlich einen Kommutierungskondensator auf, durch den eine Kommutierungskapazität für die Einspeiseeinheit bereitgestellt ist. Die Drossel und der Halbleiterschalter sind hierbei zwischen den Kommuntierungskondensator und den Zwischenkreiskondensator geschaltet.

Mit einer Kommutierungskapazität ist hier eine Kapazität gemeint, deren Wert wesentlich kleiner als der Kapazitätswert des Zwischenkreiskondensators ist. Bevorzugt beträgt die Kommutierungskapazität weniger zehn Prozent, insbesondere weniger als ein Prozent, der Zwischenkreiskapazität. Ein Betrag der Kommutierungskapazität kann auch in Abhängigkeit von einem Induktivitätswert der bereits beschriebenen Drosseln und/oder einer Induktivität des Netzes, an das der Frequenzumrichter angeschlossen ist, gewählt sein.

Mittels der Kommutierungskapazität kann erreicht werden, dass eine beim Schalten von Komponenten des Einspeisewandlers entstehende Induktionsspannung stets unterhalb eines für die Funktionstüchtigkeit des Frequenzumrichters kritischen Spannungswert bleibt. Indem die Kommutierungskapazität sehr viel kleiner als die Zwischenkreiskondensator-Kapazität gewählt ist, ist sichergestellt, dass durch einen Ladestrom des Kommutierungskondensators der Einspeisewandler beim Schließen des Hauptschützes nicht beschädigt wird.

Bei vorhandenem Kommutierungskondensator lässt sich der Zwischenkreiskondensator in mehreren aufeinanderfolgenden Umladezyklen wie folgt aufladen. In jedem Umladezyklus wird bei sperrendem Halbleiterschalter zunächst der Kommutierungskondensator mit elektrischer Energie aus dem Netz aufgeladen. Anschließend wird die Energie aus dem Kommutierungskondensator in den Zwischenkreiskondensator umgeladen, indem der Halbleiterschalter in einen leitenden Zustand geschaltet wird.

Bei der Drossel handelt es sich bevorzugt um eine stromkompensierte Gleichtaktdrossel (Englisch: Common Mode Choke), kurz Gleichtraktdrossel, durch die sowohl eine in den Zwischenkreiskondensator hinein- als auch eine aus diesem herausfließende Komponente des Ladestroms geführt ist. Eine Gleichtaktdrossel hat sich in einer Simulation als besonders vorteilhaft für das Drosseln der Stromstärke des Ladestroms herausgestellt. Bei der Vorladung des Zwischenkreises, d.h. in der Vorladephase, zeigt die Gleichtaktdrossel die beschriebene, gewünschte Wirkung, während sie in der Betriebsphase zu keiner Beeinträchtigung führt. Zudem kann mit ihr eine Welligkeit (Englisch: Ripple) der gleichgerichteten Spannung U_{ZK} besonders gut vermieden werden. Ein weiterer vorteilhafter Effekt ist eine Verbesserung der EMV (Elektromagnetische Verträglichkeit).

Ein zusätzlicher Vorteil ergibt sich, wenn der Halbleiterschalter auch zum wahlweisen Unterbrechen eines von dem Einspeisewandler zu dem Umrichter fließenden Stromes ausgelegt ist. Dann kann der Halbleiterschalter zusätzlich zum Abschalten des Zwischenkreises (und dem daran angeschlossenen Umrichter und einer elektrischen Maschine) genutzt werden.

Der Halbleiterschalter umfasst bevorzugt einen Transistor, insbesondere einen SiC-MOSFET (SiC - Siliziumcarbid; MOS - Metall-Oxid-Halbleiter; FET - Feldeffekttransistor) oder einen SiC-JFET (JFET - Sperrschicht-FET, Junction-FET) oder einen auf Silizium basierenden Transistor (Si-Transistor; Si - Silizium). SiC-basierte Transistoren sind sehr Hitzebeständig, so dass mittels des Frequenzumrichters auch elektrische Maschinen mit einer großen elektrischen Leistung, beispielsweise über 10 kW, betrieben werden können. Ein Frequenzumrichter mit einem Si-Transistor ist kostengünstiger herstellbar als einer mit einem Transistor auf der Basis von SiC.

Bevorzugt ist der Halbleiterschalter selbstsperrend, d.h. bei einer Steuerspannung von 0 V befindet er sich in einem sperrenden Zustand. Dadurch ist in vorteilhafter Weise verhindert, dass bei einem Ausfall der Steuereinrichtung für den Halbleiterschalter ein unkontrollierter Strom in dem Zwischenkreis fließt.

Der Halbleiterschalter muss nicht aus einem einzigen Bauteil bestehen. Er kann auch eine Kaskodenschaltung aus einem MOSFET und einem JFET umfassen. Dann ergibt sich der Vorteil, dass in dem Zwischenkreis des Frequenzumrichters ein selbstsperrender Halbleiterschalter bereitgestellt ist, bei dem eine Sperrschicht des MOSFET gegen eine Beschädigung durch eine Überspannung geschützt ist. Der JFET ist bevorzugt auf der Grundlage von Siliziumcarbid (SiC) gefertigt.

Eine andere vorteilhafte Weiterbildung des erfindungsgemäßen Frequenzumrichters ergibt sich, wenn in dem Zwischenkreis zusätzlich ein elektromechanischer Schalter zum Überbrücken des Halbleiterschalters bereitgestellt ist. Dann kann in der Betriebsphase die Verlustleistung im Zwischenkreis durch Schließen des mechanischen Schalters reduziert werden.

Um einen Freilauf der Drossel nach einer Unterbrechung des Ladestroms zu ermöglichen, kann diese mit einer Diode überbrückt sein, durch welche ein Stromfluss von dem Umrichter zur Einspeiseeinheit ermöglicht ist, wie er sich auch in einem Generatorbetrieb einer am Frequenzumrichter angeschlossenen elektrischen Maschine ergeben würde. Mit anderen Worten ist die Polung der Diode in dem Zwischenkreis davon abhängig, ob die Drossel in einem Leitungszweig mit Plus- oder mit Minus-Potential eingebaut ist.

Die Steuereinrichtung zum Erzeugen des Steuersignals für den Halbleiterschalter kann in vorteilhafter Weise dazu ausgebildet sein, das Steuersignal in Abhängigkeit von einer Messgrö-βe zu erzeugen, welche von einem Betriebszustand des Frequenzumrichters abhängig ist. Beispielsweise kann eine über dem Zwischenkreiskondensator abfallende Spannung gemessen und bei der Steuerung von dessen Ladestrom berücksichtigt werden. Eine solche Regelung ermöglicht es, auch bei unbekannter Zwischenkapazität oder bei angeschlossenen elektrischen Lasten (z. B. einem Schaltnetzteil zur Spannungsversorgung einer Steuereinrichtung des Frequenzumrichters) den durch die Einspeiseeinheit fließenden Strom stets unter dem kritischen Wert zu halten. Für die Regelung des Ladestromes kann z.B. ein Zweipunkt-Regelungsverfahren zugrunde gelegt werden.

Als Steuersignal kann ein getaktetes, insbesondere ein pulsweitenmoduliertes Signal an den Steuereingang des Halbleiterschalters übertragen werden. Durch solche Signale wird die in dem Halbleiterschalter umgesetzte Verlustleistung und somit eine thermische Belastung des Halbleiterschalters gering gehalten.

Alternativ zum getakteten Betrieb kann der Halbleiterschalter durch ein entsprechendes Steuersignal auch als steuerbare Stromquelle betrieben werden. Hierbei wird eine (momentane) Stromstärke eines durch den Halbleiterschalter fließenden Laststroms durch Einstellen des Steuersignals gesteuert. Unter einem Laststrom ist bei einem Bipolartransistor der Kollektor-Emitter-Strom zu verstehen, bei einem FET der Drain-Source-Strom. Im Betrieb als steuerbare Stromquelle ist die Stromstärke des Laststromes nahezu unabhängig von der Spannung, die über dem Halbleiterschalter in Flussrichtung des Laststromes abfällt. Die Stromstärke ist stattdessen über das Steuersignal, d.h. eine eingestellte Steuerspannung oder den eingestellten Steuerstrom, am Steuereingang (Basis bzw. Gate) des Halbleiterschalters einstellbar. Bei einem Bipolartransistor entspricht diese Betriebsweise dem Betrieb im aktiven oder Verstärkungsbereich, bei einem FET dem Betrieb im Sättigungsbereich.

Der Halbleiterschalter kann in vorteilhafter Weise auch dazu genutzt werden, die Einspeiseeinheit während der Betriebsphase nach einem kurzzeitigen Netzausfall zu schützen, wenn beispielsweise eine Halbwelle in einer der Phasen ausgeblieben ist. Ein solcher Netzausfall führt zu einer Unterbrechung eines von der Einspeiseeinheit aus dem Netz empfangenen elektrischen Leistungsflusses, so dass der Zwischenkreiskondensator nahezu vollständig entladen sein kann, wenn der Leistungsfluss wieder einsetzt. Gemäß einer Weiterbildung des erfindungsgemäßen Verfahrens wird hier der Zwischenkondensator in einer Nachladephase durch Steuern der Stromstärke des in den zumindest einen Zwischenkreiskondensator fließenden Nachladestromes mittels des Halbleiterschalters wieder aufgeladen. So kann ein kritischer Stromstärkewert des Nachladestromes vermieden werden.

Gemäß einer anderen Weiterbildung des erfindungsgemäßen Verfahrens wird ein Ladezustand des Zwischenkreiskondensators beobachtet. Falls nach einer vorbestimmten Zeitdauer nach Beginn der Vorladephase der Ladezustand ein vorbestimmtes Kriterium erfüllt, wenn also beispielsweise der Zwischenkondensator noch nicht zumindest zur Hälfte aufgeladen ist, wird die Vorladephase abgebrochen und der Halbleiterschalter in einen sperrenden Zustand geschaltet. So ist vorteilhaft vermieden, dass der Halbleiterschalter oder die Einspeiseeinheit beschädigt wird, wenn (umrichterseitig) im Zwischenkreis, im Umrichter selbst oder in der elektrischen Maschine bereits während der Vorladephase ein Kurzschluss vorhanden ist.

Im Folgenden wird die Erfindung anhand von bevorzugten Ausführungsbeispielen näher erläutert. Dazu zeigt:
- FIG 1: ein Blockschaltbild eines Frequenzumrichters gemäß dem Stand der Technik, mit dem eine elektrische Maschine an einem Netz betrieben wird,
- FIG 2: ein Blockschaltbild eines Frequenzumrichters gemäß einer Ausführungsform des erfindungsgemäßen Frequenzumrichters und
- FIG 3: einen zeitlichen Verlauf eines Steuersignals mit einem durch eine Pulsweitenmodulation veränderten Puls-Pause-Verhältnis,
- FIG 4: einen Verlauf eines Steuersignals, das mittels einer Pulsfrequenzmodulation gebildet ist,
- FIG 5: einen Verlauf eines Steuersignals, das mittels einer Pulsamplitudenmodulation gebildet ist, und
- FIG 6: einen Verlauf eines Steuersignals mit einem konstanten Puls-Pause-Verhältnis.

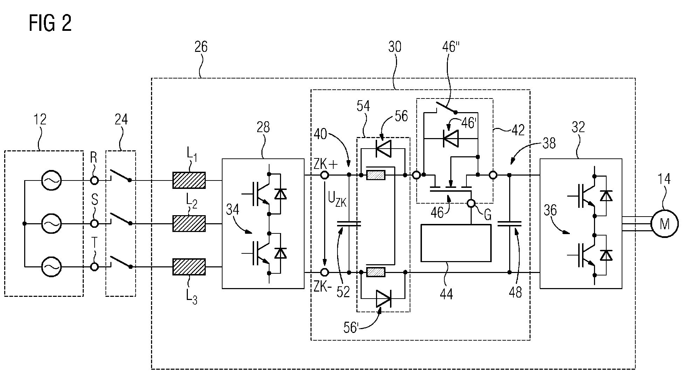

In FIG 2 ist ein Frequenzumrichter 26 gezeigt, der über ein Hauptschütz 24 an Phasen R, S, T eines Netzes 12 angeschlossen ist. An den Frequenzumrichter 26 ist eine elektrische Maschine 14 angeschlossen. Das Netz 12, das Hauptschütz 24 und die elektrische Maschine 14, die in FIG 2 gezeigt sind, entsprechen den in FIG 1 gezeigten Elementen mit den gleichen Bezugszeichen. Diese Elemente sind hier deshalb nicht noch einmal erläutert.

Bei dem Frequenzumrichter 26 ist eine Einspeiseeinheit 28 über einen Zwischenkreis 30 mit einem Umrichter 32 verschaltet.

Die Einspeiseeinheit 28 kann in bekannter Weise ausgestaltet sein. Sie weist in dem gezeigten Beispiel zum Gleichrichten der zwischen den Phasen R, S, T anliegenden Wechselspannungen drei Halbbrücken auf, von denen in FIG 2 der Übersichtlichkeit halber nur eine Halbbrücke 34 ohne weitere Verschaltungselemente dargestellt ist. Die Einspeiseeinheit 28 kann auch als Wechselrichter zum Einspeisen von elektrischer Energie in das Netz 12 betrieben werden.

Der Umrichter 32 kann ebenfalls in bekannter Weise ausgestaltet sein. In dem vorliegenden Beispiel umfasst er drei Halbbrücken, von denen in FIG 2 lediglich eine Halbbrücke 36 (ohne Verschaltungselemente) dargestellt ist. Der Umrichter 32 ist hier als Wechsel- und als Gleichrichter betreibbar.

Der Einspeiseeinheit 28 sind netzseitig Drosseln L₁, L₂, L₃ vorgeschaltet, die als Kommutierungsinduktivitäten ausgebildet sind.

Ein umrichterseitiger Teil 38 des Zwischenkreises 30 und ein einspeiseseitiger Teil 40 sind über eine Schalteinrichtung 42 miteinander verschaltet. Ein Steuereingang G eines SiC-MOSFET 46 der Schalteinrichtung 42 ist mit einer Steuereinrichtung 44 gekoppelt. Über den SiC-MOSFET 46 sind der einspeiseseitige Teil 40 und der umrichterseitige Teil 38 des Zwischenkreises 30 miteinander gekoppelt. Die Steuereinrichtung 44 steuert einen Durchgangswiderstand des SiC-MOSFET 46 durch Erzeugen einer entsprechenden Steuerspannung am Steuereingang G. Der SiC-MOSFET 46 ist hier ein selbstsperrendes Bauteil. Anstelle des SiC-MOSFET 46 kann beispielsweise auch ein SiC-JFET oder eine Kaskodenschaltung aus einem MOSFET und eine JFET verwendet sein.

Eine Diode 46' der Schalteinrichtung 42 ermöglicht in einem Generatorbetrieb der elektrischen Maschine 14 einen Stromfluss vom Umrichter 32 zur Einspeiseeinheit 28. Mittels eines elektromechanischen Schalters 46", beispielsweise eines Schützes, kann der SiC-MOSFET 46 überbrückt werden.

Im umrichterseitigen Teil 38 befindet sich ein Zwischenkreiskondensator 48. Eine Kapazität des Zwischenkreiskondensators 48 kann in dem gezeigten Beispiel größer 1 mF sein.

In dem einspeiseseitigen Teil 40 sind Stromschienen des Zwischenkreises über einen Kommutierungskondensator 52 kapazitiv miteinander gekoppelt. Der Kommutierungskondensator 52 kann ein Keramik- oder Folienkondensator sein. Die Kapazität des Kommutierungskondensators 52 ist in diesem Beispiel kleiner als 5 µF. Sie ist aber im Allgemeinen in Abhängigkeit von einer über den Frequenzumrichter 26 leitbaren Gesamtleistung gewählt, wobei sie zudem bevorzugt weniger als zehn Prozent der Kapazität des Zwischenkreiskondensators 48 beträgt.

Der Kapazitätswert des Zwischenkreiskondensators 48, d.h. die Zwischenkreiskapazität, ist derart groß, dass beim Schließen des Hauptschützes 24 die Halbbrücke 34 (und die übrigen Halbbrücken der Einspeiseeinheit 28) beschädigt würden, wenn der Ladestrom des Zwischenkreiskondensators 48 nicht begrenzt würde. Bei dem Frequenzumrichter 26 wird der Zwischenkreiskondensator 48 in einer Vorladephase mit einem Ladestrom aufgeladen, dessen Stromstärke einen kritischen Wert nicht überschreitet. Dazu stellt die Steuereinheit 44 die Steuerspannung am Steuereingang G derart ein, dass eine Stromstärke des durch den SiC-MOSFET 46 fließenden Ladestroms des Zwischenkreiskondensators 48 entsprechend begrenzt ist.

Die Vorladung des Zwischenkreises 30 kann getaktet durchgeführt werden. Dazu wird zunächst der SiC-MOSFET 46 in einen sperrenden Zustand geschaltet, so dass der umrichterseitige Teil 38 des Zwischenkreises 30 von der Einspeiseeinheit 28 elektrisch getrennt ist. Anschließend wird das Hauptschütz 24 geschlossen, so dass die Einspeiseeinheit 28 an ihrem zwischenkreisseitgen Anschluss eine gleichgerichtete Spannung erzeugt. Die Stromaufnahme des Kommutierungskondensators 52 ist hierbei nur durch die Kommutierungskapazität der Drosseln L₁, L₂, L₃ begrenzt. Da die Kommutierungskapazität des Kommutierungskondensators 52 verhältnismäßig klein ist, ist dieser schnell auf den Gleichrichtwert der Netzspannung geladen. Somit steigt trotz der harten, d.h. abrupten Anschaltung des Kommutierungskondensators 52 an das Netz 12 die mittlere Stromstärke nicht über einen für die Einspeiseeinheit 28 kritischen Wert. Da der SiC-MOSFET 46 während dieses Vorgangs sperrt, bleibt der Zwischenkreiskondensator 48 ungeladen.

Für die getaktete Vorladung des Zwischenkreiskondensators 48 wird von der Steuereinheit 44 am Steuereingang G ein getaktetes Steuersignal erzeugt, dessen Puls-Pause-Zeiten nach Bedarf und nach Größe der Zwischenkreiskapazität gewählt werden können. Durch das Steuersignal wird der SiC-MOSFET 46 puls-oder stoßweise in einen leitenden Zustand geschaltet, so dass elektrische Ladung von dem Kommutierungskondensator 52 über den SiC-MOSFET 46 in den Zwischenkreiskondensator 48 transferiert wird.

Der hierbei fließende Umladestrom wird durch eine Gleichtaktdrossel 54 begrenzt. So ist es möglich, auch bei einer sehr geringen parasitären Induktivität des Kommutierungskondensators 52 und des Zwischenkreiskondensators 48 sowie bei einem geringen ESR (ESR - equivalent series resistance, äquivalenter Reihenwiderstand) dieser beiden Kondensatoren den SiC-MOSFET 46 vollständig leitend zu schalten. Die in dem SiC-MOSFET 46 umgesetzte Verlustleistung bleibt aufgrund des begrenzten Umladestromes so gering, dass der SiC-MOSFET 46 nicht beschädigt wird.

Während der Einschaltzeit im Verlauf eines Umladezyklus kann der SiC-MOSFET 46 durchgehend in einen leitenden Zustand geschaltet sein oder aber mehrmals jeweils nur für kurze Zeit geöffnet werden. Nach einer bestimmten Einschaltzeit wird der erste Umladezyklus beendet, indem der SiC-MOSFET 46 wieder dauerhaft in den sperrenden Zustand geschaltet wird. Der Kommutierungskondensator 52 wird hierdurch erneut mit elektrischer Energie aus dem Netz 12 über Dioden der Halbbrücken der Einspeiseeinheit 28 aufgeladen, d.h. ein zweiter Umladezyklus wird begonnen.

Freilaufdioden 56, 56', die parallel zu Spulen der Gleichtaktdrossel 54 geschaltet sind, dienen dem Freilauf derselben nach jedem Abschalten des SiC-MOSFET 46.

Es werden so viele Umladezyklen durchgeführt, bis eine gewünschte Vorladespannung am Zwischenkreiskondensator 48 erreicht ist. Dies kann beispielsweise der Gleichrichtwert der Netzspannung sein. Nach Erreichen dieser Vorladeschwellwertspannung wird der SiC-MOSFET 46 dauerhaft in einen leitenden Zustand geschaltet, so dass eine möglichst geringe Spannung über ihm abfällt. Die in der daraufhin folgenden Betriebsphase auftretenden Verluste am SiC-MOSFET 46 sind somit verhältnismäßig gering.

Anstelle der getakteten Vorladung kann der SiC-MOSFET 46 für das Umladen der elektrischen Energie auch als gesteuerte Stromquelle betrieben werden. Hierzu wird er nur zu einem Teil aufgesteuert, so dass er sich zwar in einem leitenden Zustand befindet, aber die über ihm abfallende Spannung groß genug ist, um den Laststrom in der gewünschten Weise zu begrenzen.

Bei der Vorladung kann das Steuersignal für den Steuereingang G einen fest vorgegebenen Verlauf aufweisen. Es ist aber auch ein geregelter Betrieb möglich, in dem das Steuersignal, z.B. die Puls-Pause-Zeiten im getakteten Betrieb, in Abhängigkeit von einer Messgröße eingestellt wird. Beispielsweise kann dazu ein Ladezustand des Zwischenkreiskondensators 48 ermittelt werden.

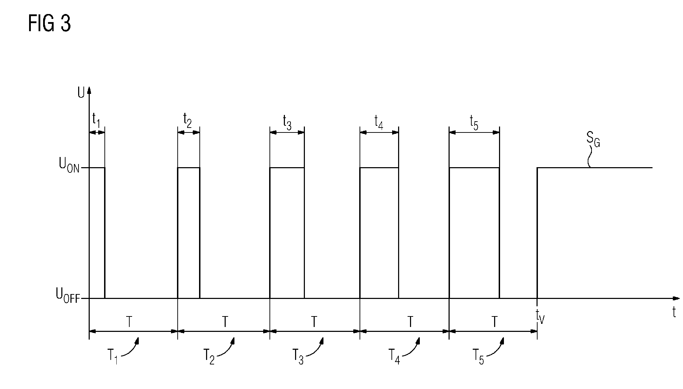

In FIG 3 ist dazu ein Verlauf eines Steuersignals S_{G} über der Zeit t gezeigt, wie es für eine getaktete Vorladung im geregelten Betrieb am Steuereingang S_{G} erzeugt werden kann. Im getakteten Betrieb wird abwechselnd zwischen einer Sperrspannung U_{OFF} und einer Durchschaltspannung U_{ON} umgeschaltet. Der Zwischenkreiskondensator 48 wird in dem gezeigten Beispiel in fünf Umladezyklen T₁, T₂, T₃, T₄ und T₅ aufgeladen. Nach einer Zeitdauer tᵥ ist dann die Vorladephase beendet, und die Betriebsphase wird begonnen, indem dauerhaft die Durchschaltspannung U_{ON} erzeugt wird.

Am Beginn des ersten Umladezyklus T₁ ist der Zwischenkreiskondensator 48 ungeladen. Dies wird von der Steuereinrichtung 44 daran erkannt, dass die Spannung über dem Kondensator nahezu 0 V beträgt. Eine Spannungsdifferenz zwischen dem aufgeladenen Kommutierungskondensator 52 und dem Zwischenkreiskondensator 48 ist somit sehr groß. Entsprechend wird der SiC-MOSFET 46 nur für eine verhältnismäßig kurze Zeitdauer t₁ in den leitenden Zustand geschaltet. Andernfalls würde der SiC-MOSFET 46 aufgrund des aus der großen Spannungsdifferenz resultierenden großen Umladestroms zu heiß werden. Die mittlere Stromstärke während des ersten Umladezyklus T₁ ergibt sich aus dem während der Zeitdauer t₁ geflossenen Stromes, und der Gesamtdauer T des ersten Umladezyklus T₁.

Nach dem ersten Umladezyklus T₁ ist die Spannung über dem Zwischenkreiskondensator 48 gestiegen. Somit ergibt sich ein geringerer Umladestrom, was eine längere Zeitdauer t₂ für das Umladen ermöglicht. Insgesamt ergibt sich durch den geregelten Betrieb eine Taktung mit wachsenden Pulsweiten, die den Zeitdauern t₁, t₂, t₃ und t₄ entsprechen. Jeder Umladezyklus T₁ bis T₅ weist hierbei dieselbe Gesamtdauer T auf.

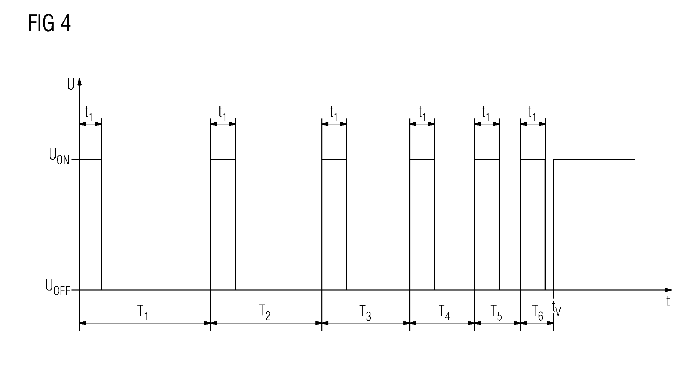

In FIG 4 ist ein Verlauf eines Steuersignals gezeigt, das mittels einer Pulsfrequenzmodulation gebildet ist. Das Steuersignal kann anstelle des Steuersignals S_{G} an den Steuereingang G übertragen werden. Bei dem in FIG 4 gezeigten Steuersignal kann für jeden Umladezyklus dessen Gesamtdauer eingestellt werden. In FIG 4 weisen deshalb Umladezyklen T₁ bis T₆ jeweils eine andere Gesamtdauer auf. Die Zeitdauer t₁, während welcher das Steuersignal den Wert U_{ON} aufweist, ist für jeden Umladezyklus T₁ bis T₆ gleich. Insgesamt wird eine mittlere Stromstärke eines Stromflusses durch den SiC-MOSFET 48 durch Festlegen der Gesamtdauer eines jeden Umladezyklus T₁ bis T₆ eingestellt.

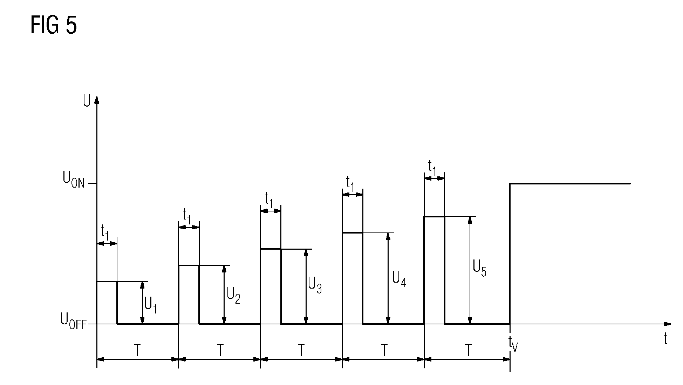

In FIG 5 ist ein Verlauf eines Steuersignals gezeigt, das mittels einer Pulsamplitudenmodulation gebildet ist. Das Steuersignal kann ebenfalls anstelle des Steuersignals S_{G} verwendet werden. Bei dem in FIG 5 gezeigten Steuersignal ergibt sich für jeden Umladezyklus dieselbe Gesamtdauer T. Auch eine Zeitdauer t₁, während welcher das Steuersignal einen von U_{OFF} unterschiedlichen Wert aufweist, ist für jeden Umladezyklus dieselbe. Zum Einstellen der mittleren Stromstärke eines Stromflusses durch den SiC-MOSFET 46 während eines Umladezyklus sind Amplitudenwerte U₁ bis U₅, die das Steuersignal in dem jeweiligen Umladezyklus während der Zeitdauer t₁ annimmt, auf einen Wert zwischen U_{OFF} und U_{ON} eingestellt. Der SiC-MOSFET 46 wird hierdurch als steuerbare Stromquelle betrieben.

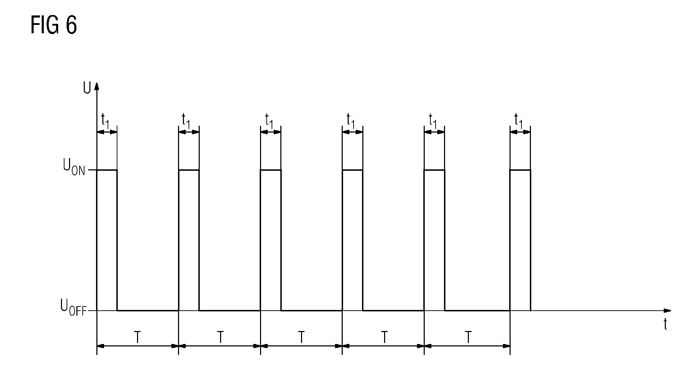

In FIG 6 ist ein weiteres, mögliches Steuersignal zum Steuern des SiC-MOSFET 46 gezeigt. Bei diesem Steuersignal sind die Gesamtdauer T, die Zeitdauer t₁, während welcher der SiC-MOSFET 46 durch das Steuersignal in einen leitenden Zustand geschaltet wird, und der Amplitudenwert des Steuersignals während der Zeitdauer t₁ für jeden Umladezyklus gleich. Insgesamt ergibt sich dadurch ein Steuersignal mit konstantem Puls-Pause-Verhältnis.

Insgesamt ist durch die Beispiele gezeigt, wie mittels eines Halbleiterschalters und einer Gegentaktdrossel bei der Vorladung des Zwischenkreiskondensators eine mittlere Stromstärke erreicht wird, die unter einem kritischen Schwellwert liegt.

## Patentansprüche

1. Frequenzumrichter (26) zum Betreiben einer elektrischen Maschine (14) an einem elektrischen Netz (12), wobei der Frequenzumrichter (26) eine Einspeiseeinheit (28) und einen Umrichter (32) aufweist, die miteinander über einen Gleichspannungs-Zwischenkreis (30) verschaltet sind, in welchem durch zumindest einen Zwischenkreiskondensator (48) eine Zwischenkreiskapazität bereitgestellt ist, **dadurch gekennzeichnet, dass** der zumindest eine Zwischenkreiskondensator (48) mit der Einspeiseeinheit (28) über eine Drossel (54) und einen Halbleiterschalter (46) gekoppelt ist und der Halbleiterschalter (46) dazu ausgelegt ist, eine Stromstärke eines von der Einspeiseeinheit (28) in den zumindest einen Zwischenkreiskondensator (48) fließenden elektrischen Stromes in Abhängigkeit von einem Steuersignal (S_{G}) zu steuern.

2. Frequenzumrichter (26) nach Anspruch 1, bei dem der Zwischenkreis (30) einen Kommutierungskondensator (52) aufweist, durch welchen eine Kommutierungskapazität für die Einspeiseeinheit (28) bereitgestellt ist, wobei die Drossel (54) und der Halbleiterschalter (46) zwischen den Kommuntierungskondensator (52) und den Zwischenkreiskondensator (48) geschaltet sind.

3. Frequenzumrichter (26) nach Anspruch 1 oder 2, bei dem die Drossel eine Gleichtaktdrossel (54) ist, durch die sowohl eine in den Zwischenkreiskondensator (48) hinein- als auch eine aus diesem (48) herausfließende Komponente eines Ladestroms geführt ist.

4. Frequenzumrichter (26) nach einem der vorhergehenden Ansprüche, bei dem der Halbleiterschalter (46) zusätzlich zum wahlweisen Unterbrechen eines von dem Einspeisewandler (28) zu dem Umrichter (32) fließenden Stromes ausgelegt ist.

5. Frequenzumrichter (26) nach einem der vorhergehenden Ansprüche, wobei der Halbleiterschalter (46) einen Transistor, insbesondere einen SiC-MOSFET (46), einen SiC-JFET oder einen Si-Transistor, oder eine Kaskodenschaltung aus einem MOSFET und einem JFET umfasst, wobei der Halbleiterschalter (46) bevorzugt selbstsperrend ist.

6. Frequenzumrichter (26) nach einem der vorhergehenden Ansprüche, bei welchem der Zwischenkreis (30) zusätzlich einen elektromechanischen Schalter (50) zum Überbrücken des Halbleiterschalters (46) aufweist.

7. Frequenzumrichter (26) nach einem der vorhergehenden Ansprüche, bei dem die Drossel (54) mit einer Diode (56, 56') überbrückt ist, durch welche ein Stromfluss von dem Umrichter (32) zur Einspeiseeinheit (28) ermöglicht ist.

8. Verfahren zum Betreiben eines Frequenzumrichters (26) gemäß einem der vorhergehenden Ansprüche, umfassend die Schritte:
- Koppeln der Einspeiseeinheit (28) mit dem Netz (12);
- in einer Vorladephase Aufladen des Zwischenkreiskondensators (48) mit elektrischer Energie aus dem Netz (12) und hierbei Steuern einer Stromstärke des Ladestromes des Zwischenkreiskondensators (48) durch Erzeugen eines Steuersignals (S_{G}) an einem Steuereingang (G) des Halbleiterschalters (46).

9. Verfahren nach Anspruch 8 zum Betreiben eines Frequenzumrichters gemäß einem der Ansprüche 2 bis 7, wobei in einer Vorladephase zum Aufladen des Zwischenkreiskondensators (48) elektrische Energie in aufeinanderfolgenden Umladezyklen von dem Kommutierungskondensator (52) in den Zwischenkreiskondensator (48) umgeladen wird und hierzu in jedem Umladezyklus bei sperrendem Halbleiterschalter (46) der Kommutierungskondensator (52) mit elektrischer Energie aus dem Netz (12) aufgeladen und anschließend bei leitendem Halbleiterschalter (46) der Zwischenkreiskondensator (48) mit der Energie aus dem Kommutierungskondensator (52) aufgeladen wird.

10. Verfahren nach einem der Ansprüche 8 oder 9, bei dem das Steuersignal (S_{G}) von einer Steuereinrichtung (44) in Abhängigkeit von einer von einem Betriebszustand des Frequenzumrichters abhängigen Messgröße, insbesondere einer über dem Zwischenkreiskondensator (48) abfallenden Spannung, erzeugt wird, wobei die Steuereinrichtung (44) die Stromstärke insbesondere anhand eines Zweipunkt-Regelverfahrens regelt.

11. Verfahren nach einem der Ansprüche 8 bis 10, wobei in der Vorladephase zum Steuern der Stromstärke als Steuersignal (S_{G}) ein getaktetes, insbesondere ein pulsweitenmoduliertes, Signal an den Steuereingang (G) übertragen wird.

12. Verfahren nach einem der Ansprüche 8 bis 10, wobei der Halbleiterschalter (46) in der Vorladephase zum Steuern der Stromstärke als steuerbare Stromquelle betrieben wird und hierbei eine Stromstärke eines durch den Halbleiterschalter (46) fließenden Laststroms durch Einstellen des Steuersignals gesteuert wird.

13. Verfahren nach einem der Ansprüche 8 bis 12, wobei in einer Betriebsphase nach einer Unterbrechung eines von der Einspeiseeinheit (28) aus dem Netz (12) empfangenen elektrischen Leistungsflusses der Zwischenkondensator (48) in einer Nachladephase wieder aufgeladen wird und hierbei eine Stromstärke eines Nachladestroms des Zwischenkreiskondensators (48) mittels des Halbleiterschalters (46) gesteuert wird.

14. Verfahren nach einem der Ansprüche 8 bis 13, wobei ein Ladezustand des Zwischenkreiskondensators (48) beobachtet wird und die Vorladephase abgebrochen und der Halbleiterschalter (46) in einen sperrenden Zustand geschaltet wird, falls nach einer vorbestimmten Zeitdauer seit Beginn der Vorladephase der Ladezustand ein vorbestimmtes Kriterium erfüllt.
